# EUROPÄISCHE PATENTSCHRIFT

(11) **EP 0 613 225 B1**
(45) Veröffentlichungstag und Bekanntmachung des Hinweises auf die Patenterteilung: **14.05.1997**
(21) Anmeldenummer: 94102611.4
(22) Anmeldetag: 22.02.1994
(51) Int. Cl.: H02G 3/26, F16L 3/08

(54) **Abstandhalter für Leitungen, insbesondere elektrische Leitungsbündel in Flugzeugen**
Spacer for conduits, especially for electrical wire bundles in aircraft
Entretoise pour fils conducteurs, notamment pour faisceaux de lignes électriques dans un avion

(30) Priorität: 26.02.1993 DE 4305963
(43) Veröffentlichungstag der Anmeldung: 31.08.1994
(73) Patentinhaber: Daimler-Benz Aerospace Airbus Gesellschaft mit beschränkter Haftung, 21129 Hamburg (DE)
(72) Erfinder: Cordes, Rolf, D-21217 Seevetal 2 (DE); Hinrichs, Hermann, D-21628 Elstorf (DE); Piede, Werner, D-21635 Jork (DE); Rossini, Guy, D-22527 Hamburg (DE)
(74) Vertreter: Hansmann, Dierk, Dipl.-Ing.

(56) Entgegenhaltungen:
- EP-A- 0 459 904
- US-A- 3 747 166
- US-A- 4 819 897

## Beschreibung

Die Erfindung betrifft einen Abstandhalter für Leitungen, insbesondere für elektrische Leitungsbündel in Flugzeugen, mit dem die Leitungsbündel zumindest mit einem durch den Abstandhalter geführten Kabelbinder verbunden sind, wobei der Abstandhalter im wesentlichen zumindest aus einem ersten Abstandhalterelement und einem zweiten Abstandhalterelement besteht, die in zusammengesteckter Form einen definierten Abstand realisieren, das erste und zweite Abstandhalterelement jeweils eine Kabelaufnahme und daran befestigt ein Verschlußteil umfaßt, wobei die Verschlußteile über eine formschlüssige Rastverbindung miteinander verbindbar sind, die Kabelaufnahme aus mindestens einer, im eingesetzten Zustand an der Außenform des Leitungsbündels anliegenden Haltebrücke besteht, um die zusammen mit dem Leitungsbündel herum ein Kabelbinder gelegt ist, deren Längsachse nahezu parallel zur Längsachse des Leitungsbündels liegt, und an deren Enden entsprechend der Außenform des Leitungsbündels angepaßte Anlagekörper vorgesehen sind.

Derartige Abstandhalter werden insbesondere bei Anwendungen im Bereich der Luft- und Raumfahrt dazu verwendet, in Leitungsbündel zusammengefaßte elektrische Leitungen im Flugzeug zu verlegen. So ist beim Verlegen von Leitungsbündeln im Flugzeug ein definierter Abstand zwischen den Leitungsbündeln bzw. zwischen Leitungsbündel und Strukturteil genau einzuhalten, der auch bei hohen Lasten gewährleistet sein muß, um eine Störung durch elektromagnetische Wellen bzw. Spannungsüberschläge auszuschließen. Solche Störungen können zu schwerwiegenden Ausfällen in Steuer- oder Kontrollsystemen führen, insbesondere bei der angewendeten "Fly-by-Wire"-Technik, bei der die Steuersignale ausschließlich über elektrische Datenleitungen übertragen werden. Eine praktisch unlösbare Verbindung ist somit nötig, die eine Abstandsveränderung der Leitungsbündel zueinander während des Fluges unmöglich macht, aber eine leichte Trennung der Abstandshalterelemente bei notwendigem Austausch von Leitungsbündeln gewährleistet.

Aus US-A-4 819 897 ist eine Anordnung zum Halten von flexiblen Leitungen bekannt. Diese Anordnung zeigt ebenfalls Abstandhalterelemente, die zu einem Abstandhalter zusammengesetzt werden. Ein Abstandhalterelement besteht im wesentlichen aus einer Kabelaufnahme und einem Verschlußteil. Mittels eines zusätzlichen Elementes (Drehzapfen) sind sie drehbar miteinander verbunden. Verdickte Kopfenden sichern den Drehzapfen gegen ein Herausfallen. Diese formschlüssige Verbindung ist wieder lösbar, indem eine Kraft entlang der Längsachse des Zapfens einwirkt.

Damit ist diese Verbindung relativ leicht lösbar, insbesondere bei hohen Belastungen oder Stößen kann auch ein unbeabsichtigtes Lösen der Verbindung die Folge sein. Auch mit der Nutzung eines separaten Drehzapfens als ein drittes Element ist für die Verbindung der Abstandhalterelemente zu einem Abstandhalter die Montage aufwendig gestaltet.

Auch aus der EP-A-0 459 904 ist ein Tragelement für Kabel bekannt, welches eine Kabelaufnahme mit Haltebrücke aufweist. Die Kabelaufnahme ist durch eine Rastverbindung des Verschlußteils mit der Hülse eines Sockels formschlüssig verbunden, der Formschluß ist durch eine kreisförmige Rippe am Verschlußteil, die in einer Nut der Hülse eingreift, realisiert. Auch diese Rastverbindung ist in Längsrichtung durch Krafteinwirkung lösbar und damit zur Halterung von Leitungsbündeln in Flugzeugen nicht geeignet.

Demgemäß liegt der Erfindung die Aufgabe zugrunde, einen Abstandhalter für Leitungen, insbesondere für elektrische Leitungsbündel in Flugzeugen, derart auszubilden, daß Leitungen auf einen definierten Abstand gehalten und in ihrer Lage genau fixierbar sind, ohne daß die Leitungsbündel bzw. Leitungen beschädigt werden und während der Betriebszeit des Flugzeuges kein unbeabsichtigtes Lösen der beiden Abstandhalterelemente möglich, aber eine leichte und montageunaufwendige Trennung der Abstandhalterelemente bei notwendigem Austausch von Leitungsbündeln gewährleistet ist.

Diese Aufgabe ist bei einem gattungsgemäßen Abstandhalter durch die im Anspruch 1 angegebenen Merkmale gelöst.

Aus dem Anspruch 1 ergibt sich der Vorteil, daß eine verdrehbare Verbindung zweier Abstandhalterelemente ermöglicht wird und damit die Leitungen auf einen definierten Abstand gehalten werden. Parallele oder sich kreuzende Leitungen sind in ihrer Lage genau fixierbar, ohne das Beschädigungen und Quetschungen an den Leitungsbündeln auftreten. Auch das Lösen der beiden Abstandhalterelemente ist unbeabsichtigt bzw. unter großen Belastungen nicht möglich, aber eine leichte Trennung der Abstandhalterelemente ist bei notwendigem Austausch von Leitungsbündeln gewährleistet.

Eine weitere Lösung dieser Aufgabe ist mit den im Anspruch 4 angegebenen Merkmalen erreicht.

Über die bereits zum Anspruch 1 ausgeführten Vorteile hinaus ist vorteilhaft, daß mit zwei völlig identischen Abstandhalterelementen die Funktion des Abstandhaltens realisiert wird und somit die Anzahl der für den Abstandhalter erforderlichen Teile reduziert wird. Damit ist auch ein Verlegen der Leitungsbündel mit den erfindungsgemäßen Abstandhaltern vereinfacht und so können Montagezeiten im Flugzeug bis auf ein Minimum reduziert werden.

Weiterbildungen und zweckmäßige Ausgestaltungen ergeben sich aus den Unteransprüchen 2, 3 und 5 bis 8.

Aus Unteranspruch 2 ergibt sich der Vorteil, daß auch größere, genau definierte Abstände zwischen den Leitungsbündeln realisiert werden können.

Aus Unteranspruch 3 ergibt sich insbesondere der Vorteil, daß vorgegebene Kreuzungswinkel von sich kreuzenden Leitungen ohne großen Aufwand genau einstellbar sind.

Die Unteransprüche 5 und 6 beinhalten zweckmäßige Ausgestaltungen der Erfindung gemäß Anspruch 4, um die Funktion eines Abstandhalters einerseits für parallele und andererseits für sich kreuzende Leitungen zu realisieren.

Eine vorteilhafte, im Unteranspruch 7 angegebene Ausgestaltung der Erfindung ermöglicht es, daß eine notwendige Befestigung von Leitungen an Strukturteilen funktional ermöglicht wird und so bei Verlegearbeiten von Leitungen Montagezeit eingespart wird.

Eine weitere vorteilhafte, im Unteranspruch 8 angegebene Ausgestaltung der Erfindung ermöglicht, daß mit nur einem Abstandhalterelement ein vorbestimmter Abstand nicht nur zwischen zwei Leitungen, sondern auch zu anderen Bauteilen erreicht werden kann und gleichzeitig ein Befestigen, beispielsweise in mit Bohrungen versehene Bleche, erfolgen kann.

Die Erfindung wird nachstehend beschrieben und anhand der Figuren 1 - 12 näher erläutert.

Es zeigen:
- Fig. 1: einen Abstandhalter in einer ersten Ausführungsform für sich kreuzende Leitungsbündel,
- Fig. 2: den Abstandhalter in der ersten Ausführungsform für parallele Leitungsbündel,
- Fig. 3: den Abstandhalter in der ersten Ausführungsform in der Ansicht III,
- Fig. 4: ein Verlängerungsstück für den Abstandhalter der ersten Ausführungsform,
- Fig. 5: den Abstandhalter in einer zweiten Ausführungsform für parallele Leitungsbündel,
- Fig. 6: ein Abstandhalterelement der zweiten Ausführungsform,
- Fig. 7: ein Abstandhalterelement der zweiten Ausführungsform in der Ansicht VII,
- Fig. 8: eine Anordnung paralleler Leitungsbündel mit Abstandhaltern,
- Fig. 9: eine Anordnung sich kreuzender Leitungsbündel mit Abstandhaltern,
- Fig. 10: einen Abstandhalter der ersten Ausführungsform in Verbindung mit einem Befestigungselement,
- Fig. 11: einen an einem Bauteil befestigtes Abstandhalterelement der ersten Ausführungsform und
- Fig. 12: einen Abstandhalter der ersten Ausführungsform für parallele Rohrleitungen.

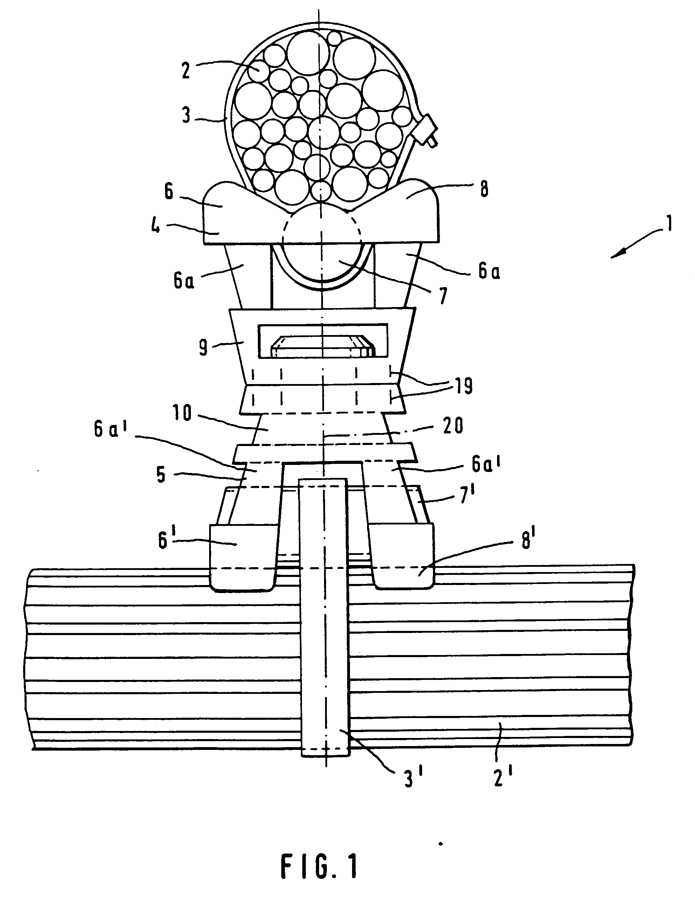

In Fig. 1 ist ein Abstandhalter 1 in einer ersten Ausführungsform für sich kreuzende Leitungsbündel 2 und 2' ersichtlich. Der Abstandhalter 1 besteht im wesentlichen zumindest aus einem ersten und einem zweiten Abstandhalterelement 4 und 5, die jeweils eine Kabelaufnahme 6 und 6' und ein Verschlußteil 9 und 10 besitzen. Die Kabelaufnahme 6 bzw. 6' dient zur Aufnahme der zu Leitungsbündeln zusammengefaßten elektrischen Leitungen, ohne daß die Leitungen an scharfkantigen Elementen zu Schaden kommen und zur genauen Fixierung der Lage des Leitungsbündels 2 bzw. 2', die in der Kabelaufnahme 6 bzw. 6' eingenommen wird. Sie besteht aus einer, im eingesetzten Zustand an der Außenform des Leitungsbündels 2 bzw. 2' anliegenden Haltebrücke 7 bzw. 7', die als zylindrischer Stift ausgebildet ist und deren Längsachse nahezu parallel zur Längsachse des Leitungsbündels 2 bzw. 2' liegt und um die Haltebrücke 7 bzw. 7' mit dem Leitungsbündel 2 bzw. 2' herum ein Kabelbinder 3 bzw. 3' geführt wird. An den Enden der Haltebrücke 7 bzw. 7' sind entsprechend der Außenform der Leitungsbündel 2 bzw. 2' angepaßte Anlagekörper 8 bzw. 8' vorgesehen, die v-förmig das Leitungsbündel zumindest teilweise aufnehmen. Die Kabelaufnahme 6 bzw. 6' ist mittels Stegen 6a bzw. 6a' am Verschlußteil 9 bzw. 10 befestigt. So ist für das Durchführen des Kabelbinders 3 bzw. 3' durch das Abstandhalterelement 4 bzw. 5 genügend Freiraum vorhanden. Die konisch ausgebildeten, mit dem kleineren Durchmesser sich berührenden Verschlußteile 9 und 10 dieser Ausführungsform werden zusammengeführt bis sie einrasten.

In einer möglichen Ausgestaltungsform des Abstandhalters 1 können mit Hilfe von Winkelmarkierungen 19, die an der Außenfläche der Verschlußteile 9 und 10 angebracht werden, genau einstellbare Kreuzungswinkel ermöglicht werden.

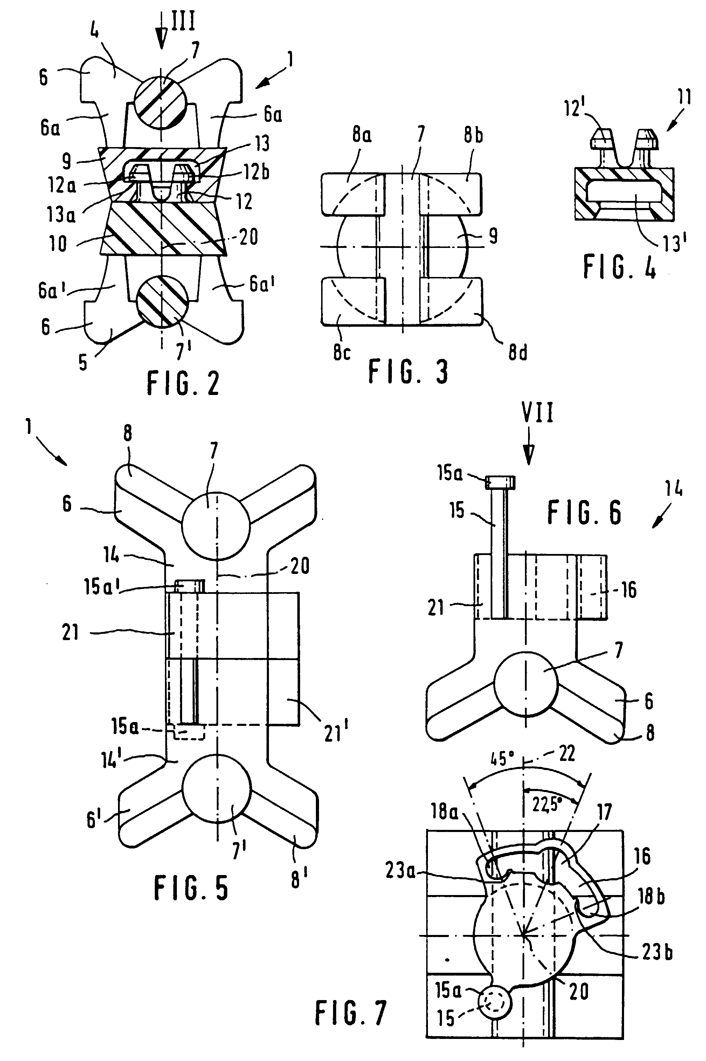

Eine mit dem Einrasten entstandene Rastverbindung ist im Schnitt in der Fig. 2 zu sehen, die den Abstandhalter 1 der ersten Ausführungsform für parallele Leitungsbündel zeigt. Sie ist realisiert mit einem am zweiten Abstandhalterelement 5 als geteilt ausgebildeten, zylindrischen Einrastzapfen 12 mit zwei Zapfenteilen 12a und 12b und am ersten Abstandhalterelement 4 mit einer entsprechend ausgebildeten Zapfenaufnahme 13. Beim Zusammenführen vom Einrastzapfen 12 und Zapfenaufnahme 13 wird der Einrastzapfen 12 aufgrund des vorhandenen Freiraumes zwischen den zwei Zapfenteilen 12a und 12b zusammengedrückt und rastet über einen ringförmigen Absatz 13a in die Zapfenaufnahme 13 ein. So ist eine formschlüssige Verbindung entstanden, die in Richtung der Längsachse 20 keine Bewegung zuläßt, aber ein gegeneinander gerichtetes Verdrehen vom ersten und zweiten Abstandhalterelement 4 und 5 um die gemeinsame Längsachse 20 ohne Einschränkung ermöglicht.
Damit ist der Abstandhalter 1 für sich kreuzende Leitungsbündel und durch ein Verdrehen um 90° für parallele Leitungsbündel geeignet.
Die formschlüssig ausgebildete Rastverbindung ist wieder lösbar, wenn der in der Zapfenaufnahme 13 eingerastete Einrastzapfen 12, dessen Zapfenteile 12a und 12b teilweise von außen zugänglich sind, mit einer Lösvorrichtung zusammengedrückt wird und so über den ringförmigen Absatz 13a aus der Zapfenaufnahme 13 ausrastet.

In Fig. 3 ist die Ansicht III des Abstandhalters 1 dargestellt und zeigt den Abstandhalter 1 in der Ansicht von oben. Ersichtlich sind die Anlagekörper 8a bis 8d, wobei jeweils zwei Anlagekörper an den Enden der Haltebrücke 7 symmetrisch zur Längsachse der Haltebrücke 7 angeordnet sind. In dieser Fig. ist die Auflagefläche für das Leitungsbündel 2 bzw. 2' erkennbar. Die Anlagekörper 8a bis 8d haben in diesem Bereich keine scharfkantigen Stellen und können das Leitungsbündel umfassen, in seiner Lage fixieren und nach dem Verbinden von dem Leitungsbündel 2 bzw. 2' und dem Abstandhalterelement 4 bzw. 5 mittels eines Kabelbinders 3 bzw. 3' halten.

In Fig. 4 ist ein Verlängerungsstück 11 zum Einsetzen zwischen den Abstandhalterelementen 4 und 5 gezeigt. Mit dem Verlängerungsstück 11 können bei Bedarf die Abstände zwischen den Leitungsbündeln vergrößert werden. Ein Abstandhalter für größere Abstände kann mittels eines Verlängerungsstückes 11, welches die jeweilig benötigte Länge L hat, realisiert sein. Eine weitere Anwendungsmöglichkeit ist das Zusammenstecken mehrerer Verlängerungsstücke derselben Länge L, die dann das entsprechende Maß für den vorbestimmten Abstand erreichen.
Die Zapfenaufnahme 13' des Verlängerungsstückes 11 dient zur Aufnahme des Einrastzapfens 12 des zweiten Abstandhalterelementes 5 und der Einrastzapfen 12' des Verlängerungsstückes 11 wird mit der Zapfenaufnahme 13 des ersten Abstandhalterelementes 4 verbunden.

Eine zweite Ausführungsform des Abstandhalters 1, im zusammengesetzten Zustand für parallele Leitungsbündel, ist in Fig. 5 gezeigt. Das erste und zweite Abstandhalterelement 14 und 14' sind völlig identische Teile.

In Fig. 6 ist das Abstandhalterelement 14 als Einzelheit dargestellt. Es besteht aus dem Verschlußteil 21 und der Kabelaufnahme 6, die im eingesetzten, hier nicht dargestellten Zustand an der Außenform des Leitungsbündels 2 anliegt. Eine Haltebrücke 7 ist als zylindrischer Stift ausgebildet an dem Anlagekörper 8 vorgesehen sind, die v-förmig das Leitungsbündel zumindest teilweise aufnehmen. Die Kabelaufnahme 6 ist am Verschlußteil 21 befestigt. Das Verschlußteil 21 besteht aus einem zylindrisch geformten Einraststift 15, an dessen Ende ein Stiftkopf 15a in Form einer Verdickung angeordnet ist, und einem Schlitz 16, der einen derartigen Einraststift 15 aufnehmen kann.

Die Ansicht VII in der Figur 7 zeigt das Abstandhalterelement 14 in der Ansicht von oben, wobei der Einraststift 15 und der Schlitz 16 erkennbar sind. Der Schlitz 16 ist mit einer im Durchmesser dem Stiftkopf 15a angepaßten Stiftaufnahme 17 und zwei dem Durchmesser des Einraststift 15 angepaßten Einraststellungen 18a und 18b versehen.
Die Längsachse des Einraststiftes 15 und die Längsachse der Stiftaufnahme 17 des Schlitzes 16 liegen diametral zueinander, d.h. auf einer Geraden, die durch die Achse 20 des Abstandhalterelementes 4 verläuft und besitzen jeweils den gleichen Abstand zur Achse 20. Die Einraststellungen 18a und 18b und die Stiftaufnahme 17 bilden den bogenförmigen Schlitz 16 und liegen auf einer Kreislinie, deren Kreismittelpunkt gleichzeitig die Achse 20 des Abstandhalterelementes 14 ist. Die Einraststellungen 18a und 18b sind symmetrisch in einem Bereich von ungefähr 45° nach jeder Seite von der Stiftaufnahme 17 aus angeordnet und bilden die Endstellungen im Schlitz 16. Die Stiftaufnahme 17 ist um 22,5° gedreht zur Achse 22, die parallel zum aufzunehmenden Leitungsbündel liegt.

Um die beiden Abstandhalterelemente 14 und 14' zu verbinden. wie in Fig. 5 in Verbindung mit Fig. 7 ersichtlich, werden die Verschlußteile 21 und 21' derart zusammengeführt, daß der Einraststift 15' vom Abstandhalterelement 14' in die Stiftaufnahme 17 des Abstandhalterelementes 14 gesteckt wird und durch Verdrehen des Einraststiftes 15' in die Einraststellung 18a die Funktion eines Abstandhalters für parallele Leitungsbündel und durch Verdrehen des Einraststiftes 15' in die Einraststellung 18b die Funktion eines Abstandhalters für sich kreuzende Leitungsbündel realisiert wird. Eine Engstelle, die mittels einer Ausbuchtung 23a bzw. 23b entsteht, wird beirn Drehen des Einraststiftes 15' in die Einraststellungen 18a oder 18b passiert und damit rastet der Einraststift 15' ein und ist so in dieser Lage verriegelt. Zum Entriegeln ist die Ausbuchtung 23a oder 23b genau in der entgegengesetzten Richtung zu überwinden und so der Einraststift 15' wieder zu entriegeln.
Genau in derselben Weise wird gleichzeitig der Einraststift 15 in die Stiftaufnahme 17' des Abstandhalterelementes 14' geführt und durch Verdrehen des Einraststiftes 15 in die Einraststellung 18a' oder 18b' eingerastet. Damit ist eine schnell zusammenfügbare und ohne Hilfsmittel wieder schnell lösbare Verbindung realisiert, die ein einfaches und schnelles Verlegen von Leitungsbündeln auf Abstand erlaubt. So können schon vor dem Verlegen der Leitungsbündel im Flugzeug an vorbestimmten Steilen der Leitungsbündel die mit jeweils einem Kabelbinder befestigten Abstandhalterelemente lose angebracht werden. Im Flugzeug selbst werden die Leitungsbündel mit den an entsprechenden Stellen lose angebrachten Abstandhalterelementen zusammengefügt, ausgerichtet und befestigt.

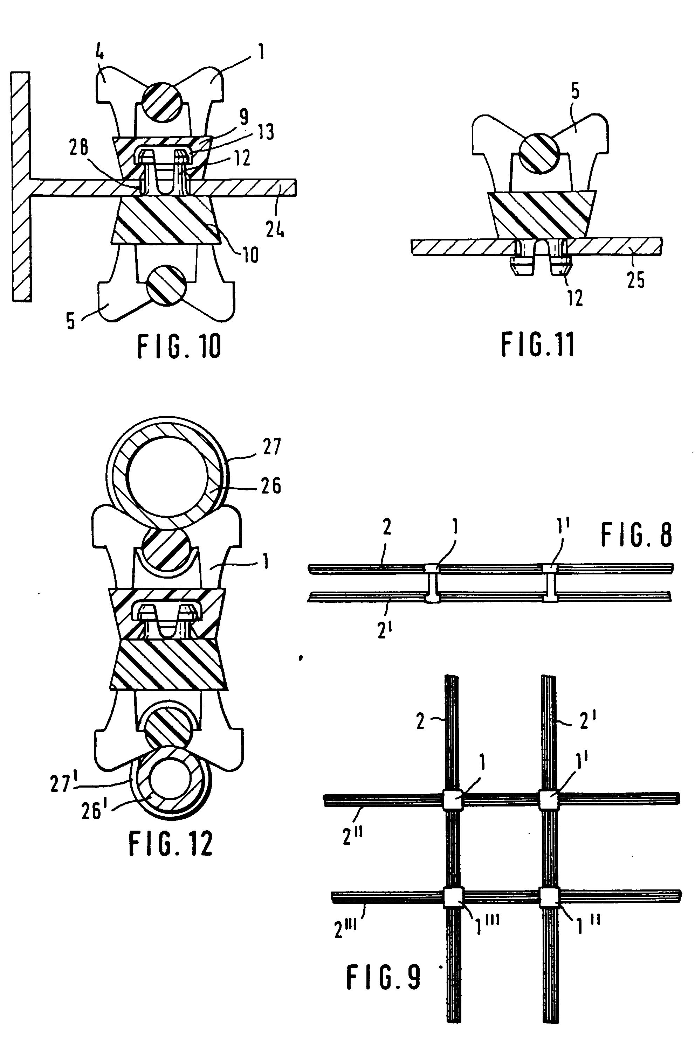

Fig. 8 zeigt eine Anordnung paralleler Leitungsbündel 2 und 2', die mit Abstandhaltern 1, 1' auf einen genau definierten Abstand gehalten werden.

In Fig. 9 ist eine Anordnung sich kreuzender Leitungsbündel 2, 2', 2" und 2"' mit Abstandhaltern 1, 1', 1" und 1''' ersichtlich.

Eine weitere vorteilhafte Ausgestaltung eines Abstandhalters der ersten Ausführungsform ist in Fig. 10 dargestellt. Um neben der Funktion des Abstandhaltens von Leitungen gleichzeitig eine Befestigungsfunktion zu erfüllen, ist der Abstandhalter 1 mit einem Befestigungselement 24 verbunden. Das Befestigungselement 24 ist beispielsweise als T-Profil ausgebildet. Um eine Verbindung mit dem Abstandhalter 1 herzustellen, wird das Verschlußteil 10 des zweiten Abstandhalterelementes 5 mit dem Einrastzapfen 12 durch eine im Befestigungselement 24 eingebrachte Bohrung 28 gesteckt und mit der Zapfenaufnahme 13 des Verschlußteiles 9 am ersten Abstandhalterelement 4 verbunden. Die Verschlußteile 9 bzw. 10 müssen entsprechend der Dicke des Befestigungselementes 24 ausgebildet sein, beispielsweise durch Verlängern des Einrastzapfens 12.

In Fig. 11 ist ein an einem Bauteil 25 befestigtes Abstandhalterelement gezeigt. Das zweite Abstandhalterelement 5 mit dem Einrastzapfen 12 ist in eine in das Bauteil 25 eingebrachte Bohrung eingerastet. Diese vorteilhafte Ausgestaltung der Erfindung ermöglicht es, daß mit nur einem Abstandhalterelement ein vorbestimmter Abstand nicht nur zwischen zwei Leitungen, sondern auch zu anderen Bauteilen erreicht werden kann und gleichzeitig ein Befestigen, beispielsweise in mit Bohrungen versehene Bleche, erfolgen kann.

Die erfindungsgemäße Lösung ist neben den bisher dargestellten Anwendungen vorteilhaft beim Verlegen von Rohrleitungen oder auch Schläuchen, Seilen, Stangen einsetzbar, wie aus Fig. 12 zu entnehmen ist. Zum Verlegen von beispielsweise Rohren 26, 26' ist mit dem erfindungsgemäßen Abstandhalter 1, der mit beispielsweise Befestigungsschellen 27, 27' zwischen den Rohren 26, 26' befestigt ist, eine einfache und zeitsparende Montage möglich.

## Patentansprüche

1. Abstandhalter (1) für Leitungen, insbesondere für elektrische Leitungsbündel (2, 2') in Flugzeugen, mit dem die Leitungsbündel (2, 2') zumindest mit einem durch den Abstandhalter (1) geführten Kabelbinder (3, 3') verbunden sind, wobei der Abstandhalter (1) im wesentlichen zumindest aus einem ersten Abstandhalterelement (4) und einem zweiten Abstandhalterelement (5) besteht, die in zusammengesteckter Form einen definierten Abstand realisieren, das erste und zweite Abstandhalterelement (4, 5) jeweils eine Kabelaufnahme (6, 6') und daran befestigt ein Verschlußteil (9, 10) umfaßt, wobei die Verschlußteile (9, 10) über eine formschlüssige Rastverbindung miteinander verbindbar sind, die Kabelaufnahme (6, 6') aus mindestens einer, im eingesetzten Zustand an der Außenform des Leitungsbündels (2, 2') anliegenden Haltebrücke (7, 7') besteht, um die zusammen mit dem Leitungsbündel (2, 2') herum ein Kabelbinder (3, 3') gelegt ist, deren Längsachse nahezu parallel zur Längsachse des Leitungsbündels liegt, und an deren Enden entsprechend der Außenform des Leitungsbündels (2, 2') angepaßte Anlagekörper (8a bis 8d, 8a' bis 8d') vorgesehen sind,
**dadurch gekennzeichnet, daß**
das Verschlußteil (9) des ersten Abstandhalterelementes (4) als eine Zapfenaufnahme (13) zur Aufnahme eines Einrastzapfens (12) ausgebildet ist und das Verschlußteil (10) des zweiten Abstandhalterelementes (5) mit einem zylindrischen Einrastzapfen (12) versehen ist, der aus mindestens zwei Zapfenteilen (12a, 12b) mit angeformten Einrastnasen besteht und die Zapfenaufnahme (13) mit einem Absatz (13a) versehen ist, an dem die Nasen der Zapfenteile (12a, 12b) im eingerasteten Zustand anliegen und somit in Längsrichtung eine Verbindung bilden, die in Richtung der Längsachse (20) keine Bewegung zuläßt, aber ein gegeneinander gerichtetes Verdrehen vom ersten und zweiten Abstandhalterelement (4,5) um die gemeinsame Längsachse (20) ohne Einschränkung ermöglicht.

2. Abstandhalter nach Anspruch 1,
**dadurch gekennzeichnet, daß**
mindestens ein Verlängerungsstück (11) zwischen dem ersten und zweiten Abstandhalterelement (4, 5) einsetzbar ist.

3. Abstandhalter nach Anspruch 1 oder 2,
**dadurch gekennzeichnet, da**ß
die Abstandhalterelemente (4, 5) Winkelmarkierungen (19) aufweisen.

4. Abstandhalter (1) für Leitungen, insbesondere für elektrische Leitungsbündel (2, 2') in Flugzeugen, mit dem die Leitungsbündel (2, 2') zumindest mit einem durch den Abstandhalter (1) geführten Kabelbinder (3, 3') verbunden sind, wobei der Abstandhalter (1) im wesentlichen zumindest aus einem ersten Abstandhalterelement (14) und einem zweiten Abstandhalterelement (14') besteht, die in zusammengesteckter Form einen definierten Abstand realisieren, das erste und zweite Abstandhalterelement (14, 14') jeweils eine Kabelaufnahme (6, 6') und daran befestigt ein Verschlußteil (21, 21') umfaßt, wobei die Verschlußteile (21, 21') über eine formschlüssige Rastverbindung miteinander verbindbar sind, die Kabelaufnahme (6, 6') aus mindestens einer, im eingesetzten Zustand an der Außenform des Leitungsbündels (2, 2') anliegenden Haltebrükke (7, 7') besteht, um die zusammen mit dem Leitungsbündel (2, 2') herum ein Kabelbinder (3, 3') gelegt ist, deren Längsachse nahezu parallel zur Längsachse des Leitungsbündels liegt, und an deren Enden entsprechend der Außenform des Leitungsbündels (2, 2') angepaßte Anlagekörper (8, 8') vorgesehen sind,
**dadurch gekennzeichnet, daß**
die Abstandhalterelemente (14, 14') jeweils ein gleiches Verschlußteil (21, 21') aufweisen, wobei das Verschlußteil (21, 21') mit einem Einraststift (15), an dessen Ende ein Stiftkopf (15a) angeordnet ist, und mit einem Schlitz (16) versehen ist, der Schlitz (16) eine im Durchmesser dem Stiftkopf (15a) angepaßte Stiftaufnahme (17) und zumindest zwei Einraststellungen (18a, 18b) umfaßt, die in einem Bereich bis 90° ein gegeneinander gerichtetes Verdrehen vom ersten und zweiten Abstandhalterelement (14, 14') um die gemeinsame Längsachse (20) ermöglichen und die Längsachse des Einraststifts (15) und die Längsachse der Stiftaufnahme (17) des Schlitzes (16) diametral gegenüberliegen.

5. Abstandhalter nach Anspruch 4,
**dadurch gekennzeichnet, daß**
die Einraststellungen (18a, 18b) und die Stiftaufnahme (17) auf einer Kreislinie liegen, deren Kreismittelpunkt gleichzeitig die Achse (20) des Abstandhalterelementes (14, 14') ist und die Einraststellungen (18a, 18b) symmetrisch zur Stiftaufnahme (17) angeordnet sind.

6. Abstandhalter nach Anspruch 5,
**dadurch gekennzeichnet, daß**
die Einraststellungen (18a, 18b) in einem Bereich von ungefähr 45° ausgehend von der Stiftaufnahme (17) angeordnet sind, wobei die Stiftaufnahme (17) um ungefähr 22,5° gedreht zu einer parallel zum aufzunehmenden Leitungsbündel liegenden Achse (22) ist.

7. Abstandhalter nach einem der Ansprüche 1 bis 6,
**dadurch gekennzeichnet, daß**
ein Befestigungselement (24) zwischen dem ersten Abstandhalterelement (4) und dem zweiten Abstandhalterelement (5) einfügbar ist.

8. Abstandhalter nach einem der vorangegangenen Ansprüche,
**dadurch gekennzeichnet, daß**
das zweite Abstandhalterelement (5) mittels des Einrastzapfens (12) an einem Bauteil (25), beispielsweise Blech, befestigbar ist.

## Claims

1. Spacer (1) for cables, particularly for bundles of electrical cables (2, 2') in aircraft, to which the bundles of cables (2, 2') are connected at least with a cable binder (3, 3') passed through the spacer (1), wherein the spacer (1) consists essentially of at least a first spacer element (4) and a second spacer element (5) which in engaged form create a defined spacing, the first and second spacer elements (4, 5) each comprising a cable receptacle (6, 6') with a locking part (9, 10) fixed thereon, and wherein the locking parts (9, 10) can be connected to one another by way of a positive locking connection, the cable receptacle (6, 6') consists of at least one retaining bridge (7, 7') which in the inserted state butts against the outer contour of the bundle of cables (2, 2') and around which, together with the bundle of cables (2, 2'), is placed a cable binder (3, 3'), the longitudinal axis of which is almost parallel to the longitudinal axis of the bundle of cables, abutment pieces (8a to 8d, 8a' to 8d') which are adapted to the outer contour of the bundle of cables (2, 2') being provided on the ends of the retaining bridge, characterised in that the locking part (9) of the first spacer element (4) is constructed as a lug receptacle (13) for receiving an engaging lug (12) and the locking part (10) of the second spacer element (5) is provided with a cylindrical engaging lug (12) which consists of at least two lug parts (12a, 12b) with integrally moulded engaging catches, and the lug receptacle (13) is provided with a shoulder (13a) on which the catches of the lug parts (12a, 12b) rest in the engaged state and thus form a connection in the longitudinal direction which does not allow any movement in the direction of the longitudinal axis (20) but enables the first and second spacer elements (4, 5) to be turned in opposite directions to one another about the common longitudinal axis (20) without restriction.

2. Spacer according to Claim 1, characterised in that at least one extension piece (11) can be inserted between the first and second spacer elements (4, 5).

3. Spacer according to Claim 1 or 2, characterised in that the spacer elements (4, 5) have angle markings (19).

4. Spacer (1) for cables, particularly for bundles of electrical cables (2, 2') in aircraft, to which the bundles of cables (2, 2') are connected at least with a cable binder (3, 3') passed through the spacer (1), wherein the spacer (1) consists essentially of at least a first spacer element (14) and a second spacer element (14') which in engaged form create a defined spacing, the first and second spacer elements (14, 14') each comprising a cable receptacle (6, 6') with a locking part (21, 21') fixed thereon, and wherein the locking parts (21, 21') can be connected to one another by way of a positive locking connection, the cable receptacle (6, 6') consists of at least one retaining bridge (7, 7') which in the inserted state butts against the outer contour of the bundle of cables (2, 2') and around which, together with the bundle of cables (2, 2'), is placed a cable binder (3, 3'), the longitudinal axis of which is almost parallel to the longitudinal axis of the bundle of cables, abutment pieces (8, 8') which are adapted to the outer contour of the bundle of cables (2, 2') being provided on the ends of the retaining bridge, characterised in that the spacer elements (14, 14') each have an identical locking part (21, 21'), wherein the locking part (21, 21') is provided with an engaging pin (15), on the end of which is disposed a pin head (15a), and with a slot (16) which comprises a pin receptacle (17) adapted in diameter to the pin head (15a) and at least two engagement positions (18a, 18b) which within a range up to 90° enable the first and second spacer elements (14, 14') to be turned in opposite directions to one another about the common longitudinal axis (20), the longitudinal axis of the engaging pin (15) and the longitudinal axis of the pin receptacle (17) of the slot (16) lying diametrically opposite one another.

5. Spacer according to Claim 4, characterised in that the engagement positions (18a, 18b) and the pin receptacle (17) lie on a circular line, wherein the centre point of the circle simultaneously forms the axis (20) of the spacer element (14, 14') and the engagement positions (18a, 18b) are disposed symmetrically with respect to the pin receptacle (17).

6. Spacer according to Claim 5, characterised in that the engagement positions (18a, 18b) are disposed in a range of approximately 45° starting from the pin receptacle (17), the pin receptacle (17) being rotated by approximately 22.5° with respect to an axis (22) lying parallel to the bundle of cables to be received.

7. Spacer according to one of Claims 1 to 6, characterised in that a fixing element (24) can be inserted between the first spacer element (4) and the second spacer element (5).

8. Spacer according to one of the preceding claims, characterised in that the second spacer element (5) can be fixed by means of the engaging lug (12) on a component (25), for example sheet metal.

## Revendications

1. Entretoise (1) pour des conduites, plus particulièrement pour des faisceaux de lignes électriques (2, 2') dans les avions, au moyen de laquelle les faisceaux de lignes (2, 2') sont connectés au moins à une attache de câble (3, 3') guidée par l'entretoise (1), l'entretoise (1) se composant en substance au moins d'un premier élément de retenue (4) et d'un second élément de retenue (5) qui, assemblés, forment un écart défini, les premier et second éléments de retenue (4, 5) comprenant un logement pour câble (6, 6') et une partie de fermeture (9, 10) fixée à ce dernier, de même que les parties de fermeture (9, 10) peuvent être reliées l'une à l'autre par l'intermédiaire d'une connexion d'arrêt à engagement positif, le logement pour câble (6, 6') étant composé d'au moins un pont d'arrêt (7, 7') reposant, lorsqu'il est inséré, sur la forme extérieure du faisceau de lignes (2, 2'), un pont autour duquel est placé, avec le faisceau de lignes (2, 2'), une attache de câble (3, 3') dont l'axe longitudinal est pratiquement parallèle à l'axe longitudinal du faisceau de lignes et aux extrémités de laquelle sont prévus des corps d'appui (8a à 8d, 8a' à 8d') adaptés à la forme extérieure du faisceau de lignes (2, 2'), **caractérisée en ce que** la partie de fermeture (9) du premier élément de retenue (4) est conçue comme un logement de tourillon (13) destiné à accueillir un tourillon à encliquetage (12) et en ce que la partie de fermeture (10) du second élément de retenue (5) est pourvue d'un tourillon à encliquetage cylindrique (12) qui se compose au moins de deux parties de tourillon (12a, 12b) pourvues de tenons d'encliquetage, le logement de tourillon (13) étant pourvu d'une saillie (13a) sur laquelle reposent les tenons des parties de tourillon (12a, 12b) lorsqu'elles sont encliquetées et forment ainsi un assemblage dans la direction longitudinale qui ne permet aucun déplacement dans la direction de l'axe longitudinal (20) mais qui rend possible sans aucune limitation une rotation opposée des premier et second éléments de retenue (4, 5) autour de l'axe longitudinal commun (20).

2. Entretoise selon la revendication 1, caractérisée en ce que une pièce de prolongement (11) au moins peut être insérée entre les premier et second éléments de retenue (4, 5).

3. Entretoise selon la revendication 1, caractérisée en ce que les éléments de retenue (4, 5) présentent des marques d'angle (19).

4. Entretoise (1) pour des conduites, plus particulièrement pour des faisceaux de lignes électriques (2, 2') dans les avions, au moyen de laquelle les faisceaux de lignes (2, 2') sont connectés au moins à une attache de câble (3, 3') guidée par l'entretoise (1), l'entretoise (1) se composant en substance au moins d'un premier élément de retenue (4) et d'un second élément de retenue (5) qui, assemblés, forment un écart défini, les premier et second éléments de retenue (4, 5) comprenant un logement pour câble (6, 6') et une partie de fermeture (9, 10) fixée à ce dernier, de même que les parties de fermeture (9, 10) peuvent être reliées l'une à l'autre par l'intermédiaire d'une connexion d'arrêt à engagement positif, le logement pour câble (6, 6') étant composé d'au moins un pont d'arrêt (7, 7') reposant, lorsqu'il est inséré, sur la forme extérieure du faisceau de lignes (2, 2'), un pont autour duquel est placé, avec le faisceau de lignes (2, 2'), une attache de câble (3, 3') dont l'axe longitudinal est pratiquement parallèle à l'axe longitudinal du faisceau de lignes et aux extrémités de laquelle sont prévus des corps d'appui (8a à 8d, 8a' à 8d') adaptés à la forme extérieure du faisceau de lignes (2, 2'), **caractérisée en ce que** les éléments de retenue (14, 14') présentent une même partie de fermeture (21, 21'), ladite partie de fermeture (21, 21') étant pourvue d'une broche d'arrêt (15), à l'extrémité de laquelle est disposée une tête de broche (15a), et d'une fente (16), en ce que la fente (16) comprend un logement pour broche (17) adapté au diamètre de la tête de broche (15a) et au moins deux positions d'encliquetage (18a, 18b) qui permettent une rotation opposée jusqu'à 90° des premier et du second éléments de retenue (14, 14') autour de l'axe longitudinal commun (20) et en ce que l'axe longitudinal de la broche d'arrêt (15) et l'axe longitudinal du logement pour broche (17) de la fente (16) sont diamétralement opposés.

5. Entretoise selon la revendication 4, caractérisée en ce que les positions d'encliquetage (18a, 18b) et le logement pour broche (17) se trouve sur un cercle dont le centre constitue simultanément l'axe (20) de l'élément de retenue (14, 14') et en ce que les positions d'encliquetage (18a, 18b) sont placées symétriquement par rapport au logement pour broche (17).

6. Entretoise selon la revendication 5, caractérisée en ce que les positions d'encliquetage (18a, 18b) sont placées dans une zone située à environ 45° à partir du logement pour broche (17), ledit logement pour broche (17) étant tourné à plus ou moins 22,5° par rapport à un axe (22) parallèle au faisceau de lignes à accueillir.

7. Entretoise selon l'une ou l'autre des revendications 1 à 6, caractérisée en ce que un élément de fixation (24) peut être ajouté entre le premier élément de retenue (4) et le second élément de retenue (5).

8. Entretoise selon l'une ou l'autre des revendications mentionnées ci-dessus, caractérisée en ce que le second élément de retenue (5) peut être fixé au moyen du tourillon à encliquetage (12) sur une pièce de construction (25), par exemple de la tôle.
